# EUROPÄISCHE PATENTSCHRIFT

(11) **EP 0 826 519 B1**
(45) Veröffentlichungstag und Bekanntmachung des Hinweises auf die Patenterteilung: **02.05.2003**
(21) Anmeldenummer: 97110182.9
(22) Anmeldetag: 21.06.1997
(51) Int. Cl.: B60B 3/16

(54) **Fahrzeugrad**
Vehicle wheel
Roue de véhicule

(30) Priorität: 29.08.1996 DE 19636317
(43) Veröffentlichungstag der Anmeldung: 04.03.1998
(73) Patentinhaber: Dr.Ing.h.c. F. Porsche Aktiengesellschaft, 70435 Stuttgart (DE)
(72) Erfinder: Stach, Jens, 71735 Eberdingen (DE)

(56) Entgegenhaltungen:
- EP-A- 0 039 934
- EP-A- 0 553 696
- EP-A- 0 641 677
- AT-B- 349 336
- DE-A- 3 629 271
- DE-U- 29 605 765

## Beschreibung

Die Erfindung bezieht sich auf ein Fahrzeugrad nach dem Oberbegriff des Anspruchs 1.

Es ist bei Fahrzeugrädern bekannt, die Radnabe mit einem geschlossenen Zentrierring zu versehen, der zur Aufnahme von gegenüberliegenden Zentrierstegen an einer Fahrzeugnabe ausgebildet ist. Beim Montieren des Rades wird über den Zentrierring und über die Zentrierstege eine genaue Ausrichtung des Rades zum Befestigen erreicht.

Aufgabe der Erfindung ist es, ein Fahrzeugrad zu schaffen, das eine Zentrierung zur Fahrzeugnabe gewährleistet und darüber hinaus gewichtsmäßig leichter ist als ein vergleichbares Fahrzeugrad.

Diese Aufgabe wird erfindungsgemäß durch die kennzeichnenden Merkmale des Anspruchs 1 gelöst. Weiter vorteilfhafte Merkmale beinhalten die Unteransprüche.

Die mit der Erfindung hauptsächlich erzielten Vorteile bestehen darin, daß das Rad durch eine Auftrennung eines Zentrierringes in der Radnabe gewichtsmäßig leichter wird, gegenüber einem Rad, bei dem der Zentrierring geschlossen ausgeführt ist.

Der Zentrierring der Radnabe ist zwischen Befestigungskalotten mit Durchbrechungen versehen, die etwa der Breite der Kalotten entsprechen. Diese Durchbrechungen erstrecken sich bis zum Grund des Felgensterns, wobei die Zentrierstege annähernd in halber Höhe der Befestigungskalotten angeordnet sind und mit deren Stirnflächen abschließen.

Zwischen den Stirnflächen der Befestigungskalotten und der Zentrierstege ist eine ausgerundete Rille vorgesehen, in welche die Zentrierstege der Fahrzeugnabe beim Befestigen eingreifen.

Die Zentrierstege der Fahrzeugnabe weisen eine solche Länge auf, daß die Durchbrechungen überbrückbar sind und in jeder Stellung der Fahrzeugnabe zur Radnabe eine geführte Zentrierung gewährleistet ist.

Ein Ausführungsbeispiel der Erfindung ist in der Zeichnung dargestellt und wird im folgenden näher beschrieben.

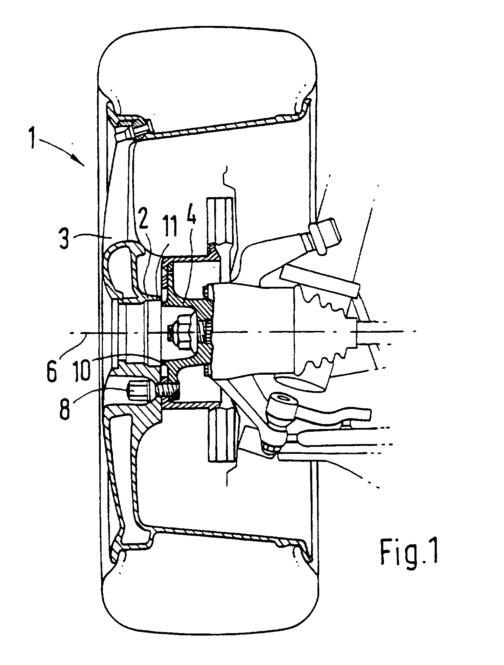

Es zeigen
- Fig. 1: einen Schnitt durch ein Fahrzeugrad mit Fahrzeugnabe und Radnabe,

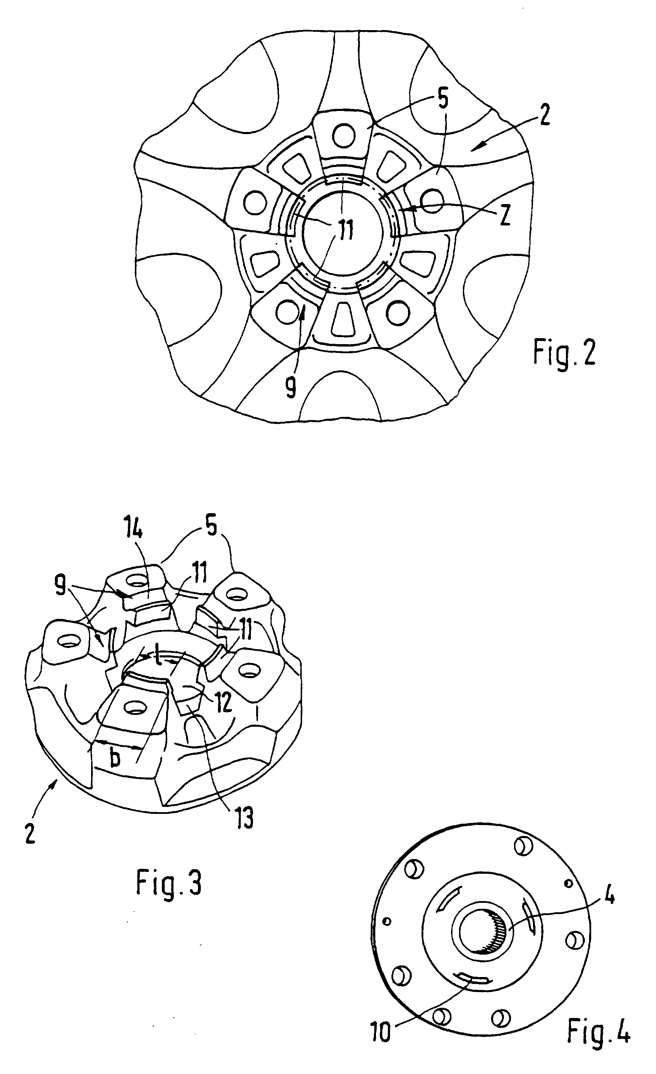

- Fig. 2: eine Draufsicht auf eine Radnabe mit fünf Zentrierstegen,
- Fig. 3: eine schaubildliche Darstellung der Radnabe mit den Zentrierstegen und
- Fig. 4: eine Draufsicht auf eine Fahrzeugnabe mit drei Zentrierstegen.

Ein Fahrzeugrad 1 ist mit einer Radnabe 2 im Felgenstern 3 versehen, der zum Befestigen an einer Fahrzeugnabe 4 Befestigungskalotten 5 aufweist. Diese sind um eine Radachse 6 herum gruppiert und weisen Bohrungen 7 für Befestigungsschrauben 8 auf.

Zum genauen Zusammensetzen und zur Befestigung der Radnabe 2 an der Fahrzeugnabe 4 dienen ein Zentrierring Z mit Zentrierungen 9 an der Radnabe 2 und mit diesen korrespondierende Zentrierstegen 10 an der Fahrzeugnabe 4.

Die Zentrierungen 9 an der Radnabe 2 bestehen aus Stegen 11, welche innenseitig der Befestigungskalotten 5 auf einem Kreisring angeordnet sind. Sie weisen eine Länge ℓ auf, die etwa der Breite b der Befestigungskalotten 5 entspricht. Zwischen den Stegen 11 sind Durchbrechungen 12 vorgesehen, die sich bis zum Grund 13 des Felgensterns 3 erstrecken.

Zum zentrierten Eingriff der Stege 10 in der Fahrzeugnabe 4 ist zwischen den Kalotten 5 und den Zentrierstegen 11 eine ausgerundete Rille 14 vorgesehen, in welche der Steg 10 hineinragt.

Damit ein Eingriff der Stege 10 in die Rillen 14 der Zentrierstege 11 gewährleistet ist, weisen die Durchbrechungen 12 eine solche Länge auf, die geringer ist als die Länge der Stege 10 in der Fahrzeugnabe 4.

## Patentansprüche

1. Fahrzeugrad (1) mit einer Radnabe (2) zum Befestigen an einer Fahrzeugnabe (4), wobei die Radnabe (2) einen Zentrierring (Z) für Zentrierstege (10) der Fahrzeugnabe (4) aufweist, **dadurch gekennzeichnet, daß** der Zentrierring (Z) der Radnabe (2) im Bereich von Befestigungskalotten (5) Zentrierstege (11) aufweist und jeweils zwischen den einzelnen Befestigungskalotten (5) im Zentrierring (Z) Durchbrechungen (12) vorgesehen sind.

2. Fahrzeugrad nach Anspruch 1, **dadurch gekennzeichnet, daß** die Zentrierstege (11) eine der Breite (b) der Kalotten (5) entsprechende Länge (ℓ) aufweisen.

3. Fahrzeugrad nach den Ansprüchen 1 oder 2, **dadurch gekennzeichnet, daß** die Durchbrechungen (12) etwa im Grund (13) des Felgensterns (3) auslaufen.

4. Fahrzeugrad nach den Ansprüchen 1, 2 oder 3, **dadurch gekennzeichnet, daß** zwischen den Zentrierstegen (11) und den Befestigungskalotten (5) eine ausgerundete Rille (14) vorgesehen ist.

5. Fahrzeugrad nach den Ansprüchen 1, 2, 3 oder 4, **dadurch gekennzeichnet, daß** die Zentrierstege (10) der Fahrzeugnabe (4) breiter ausgeführt sind als der Abstand zwischen den einzelnen Zentrierstegen (11) der Radnabe (2).

## Claims

1. A vehicle wheel (1) with a wheel hub (2) for fastening to a vehicle hub (4), wherein the wheel hub (2) has a centring ring **(Z)** for centring webs (10) of the vehicle hub (4), **characterized in that** the centring ring **(Z)** of the wheel hub (2) has centring webs (11) in the region of fastening cups (5) and apertures (12) are provided between the individual fastening cups (5) in the centring ring **(Z)** in each case.

2. A vehicle wheel according to Claim 1, **characterized in that** the centring webs (11) have a length **(*l*)** corresponding to the width **(b)** of the cups (5).

3. A vehicle wheel according to Claim 1 or 2, **characterized in that** the apertures (12) terminate substantially in the base (13) of the rim spider (3).

4. A vehicle wheel according to Claim 1, 2 or 3, **characterized in that** a rounded channel (14) is provided between the centring webs (11) and the fastening cups (5).

5. A vehicle wheel according to Claim 1, 2, 3 or 4, **characterized in that** the centring webs (10) of the vehicle hub (4) are wider than the distance between the individual centring webs (11) of the wheel hub (2).

## Revendications

1. Roue de véhicule (1) avec un moyeu de roue (2) à fixer sur un moyeu de véhicule (4), le moyeu de roue (2) comportant un anneau de centrage (Z) pour des nervures de centrage (10) du moyeu de véhicule (4), **caractérisée en ce que** l'anneau de centrage (Z) du moyeu de roue (2) comporte, dans la zone de calottes de fixation (5), des nervures de centrage (11) et des ajours (12) sont prévus entre les différentes calottes de fixation (5), dans l'anneau de centrage (Z).

2. Roue de véhicule selon la revendication (1), **caractérisée en ce que** les nervures de centrage (11) présentent une longueur ( ) qui correspond à la largeur (b) de la calotte (5).

3. Roue de véhicule selon les revendications 1 ou 2, **caractérisée en ce que** les ajours (12) débouchent approximativement dans le fond (13) de l'étoile de jante (3).

4. Roue de véhicule selon les revendications 1, 2 ou 3, **caractérisée en ce qu'**une gorge (14) arrondie est prévue entre les nervures de centrage (11) et les calottes de fixation (5).

5. Roue de véhicule selon les revendications 1, 3 ou 4, **caractérisée en ce que** les nervures de centrage (10) du moyeu de véhicule (4) sont plus larges que la distance entre les différentes nervures de centrage (11) du moyeu de roue (2).
